## Europäisches Patentamt

## European Patent Office

## Office européen des brevets

(19)

(11) Numéro de publication: **0 106 719**
**B1**

(12) **FASCICULE DE BREVET EUROPEEN**

(45) Date de publication du fascicule du brevet:
13.05.87

(51) Int. Cl.⁴: **G 01 S 15/87**

(21) Numéro de dépôt: **83401693.3**

(22) Date de dépôt: **22.08.83**

(54) Dispositif à ultrasons pour le repérage d'un objet.

(30) Priorité: **31.08.82 FR 8214855**

(43) Date de publication de la demande:
**25.04.84 Bulletin 84/17**

(45) Mention de la délivrance du brevet:
**13.05.87 Bulletin 87/20**

(84) Etats contractants désignés:
**BE DE FR GB IT SE**

(56) Documents cités:
**DE - A - 1 516 621**
**DE - A - 2 045 234**
**FR - A - 1 318 648**
**GB - A - 2 032 104**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Saglio, Robert, 9, rue des Marchals, F-92160 Antony (FR)**

(74) Mandataire: **Mongrédien, André et al, c/o BREVATOME 25, rue de Ponthieu, F-75008 Paris (FR)**

ACTORUM AG

## Description

La présente invention a pour objet un dispositif à ultrasons pour le repérage de l'existence et/ou de la position d'un objet. Elle trouve une application en métrologie et notamment dans l'asservissement en position d'objets divers, tels que par exemple des crayons d'assemblages combustibles de réacteurs nucléaires lors d'opérations de contrôle.

Une sonde ultrasonore comprend, de manière classique, un transducteur ultrasonore, un circuit d'alimentation de ce transducteur consistant en un générateur d'impulsions électriques, un circuit de traitement du signal délivré par le transducteur en réponse aux échos ultrasonores qu'il reçoit, ces échos provenant des divers obstacles présents sur le trajet du faisceau ultrasonore.

Il est possible, avec une telle sonde, de repérer la position d'un objet, par exemple la position de l'axe d'un cylindre. Il suffit pour cela de déplacer la sonde dans une direction perpendiculaire à cet axe et de relever l'amplitude du signal délivré par le transducteur. Cette amplitude est d'abord nulle lorsque la sonde n'est pas en face du cylindre, puis croît lorsque le faisceau ultrasonore commence à frapper le cylindre, passe par un maximum lorsque le transducteur est en face de l'axe du cylindre, enfin décroît pour finir par s'annuler à nouveau. Le passage par le maximum indique la position de l'axe de l'objet.

Un tel dispositif peut être inclus dans un système de réglage de la position de l'objet repéré (ou dans une boucle d'asservissement de cette position à celle de la sonde). Il suffit pour cela d'associer à celle-ci un moyen pour agir sur la position de l'objet afin de rendre maximum le signal délivré par la sonde.

Un tel asservissement de position est un problème qui se pose par exemple lors de l'examen de crayons d'assemblages combustibles de réacteurs nucléaires. Ces crayons doivent être asservis en position par rapport à une fenêtre d'observation, pendant tout le temps où ils défilent devant cette fenêtre. La sonde ultrasonore est alors solidaire de la fenêtre et le crayon est déplacé de telle sorte qu'il soit correctement centré par rapport à la fenêtre.

L'inconvénient du dispositif de repérage précédent est qu'il conduit à une indétermination sur le sens de la correction à apporter à la position de l'objet. En effet, le signal qui sert à commander le déplacement de l'objet est une courbe en cloche pour laquelle la variation du signal présente toujours le même signe par rapport à la valeur maximale. En d'autres termes, la fonction représentant le signal est paire. On ignore donc a priori dans quelle direction il faut déplacer l'objet à asservir pour rendre l'amplitude détectée maximale.

La présente invention a justement pour objet un dispositif de repérage qui évite cet inconvénient en ce sens qu'il fournit un signal de caractère impair permettant de définir non seulement en grandeur mais également en signe l'écart par rapport à une référence.

L'invention permet par ailleurs de détecter la présence d'objets de profils déterminés, grâce à une adaptation du dispositif à l'objet à reconnaître.

Ces buts sont atteints, selon l'idée générale à la base de l'invention, par l'utilisation d'une sonde ultrasonore qui comprend deux transducteurs (au moins), par l'échantillonage des signaux délivrés par les transducteurs et par la formation d'un signal de différence entre les signaux échantillonés.

De façon précise, la présente invention a pour objet un dispositif pour le repérage de l'existence et/ou de la position d'un objet traversant le champs de vue du dispositif, ce dispositif comprenant une sonde utlrasonore constituée par deux transducteurs ultrasonores travaillant en impulsions et émettant chacun un faisceau d'ondes ultrasonores en direction de l'objet à repérer, les deux faisceaux étant dirigés le long des voies séparées, des moyens d'alimentation des transducteurs, des moyens de traitement des signaux délivrés par la sonde, ces moyens étant capables notamment d'effectuer une différence entre deux signaux, ce dispositif étant caractérisé par le fait que les transducteurs émettent des faisceaux focalisés sur des taches focales, les deux taches focales étant décalées l'une par rapport à l'autre le long de la direction de déplacement relatif de l'objet, le plan médiateur défini par les deux taches focales définissant un plan de référence pour ledit repérage, et par le fait que les moyens de traitement comprennent un circuit d'échantillonage et de maintien apte à prélever l'amplitude maximale des signaux délivrés par les deux transducteurs et à maintenir cette amplitude, et un circuit apte à former un signal de différence entre les signaux échantillonnés et maintenus correspondant aux deux transducteurs.

Les caractéristiques de l'invention apparaîtront mieux après la description qui suit, d'exemples de réalisation donnés à titre explicatif et nullement limitatif. Cette description se réfère à des dessins annexés sur lesquels:

– la figure 1 représente un schéma général du dispositif de l'invention,

– la figure 2 illustre un exemple de disposition particulière des deux transducteurs,

– la figure 3 est un diagramme correspondant à la disposition de la figure précédente,

– la figure 4 illustre un cas où les taches focales des deux faisceaux ultrasonores se recouvrent partiellement,

– la figure 5 montre l'allure des variations d'amplitude des signaux provenant des deux transducteurs dans le cas de la figure précédente,

– la figure 6 montre l'allure du signal de différence correspondant,

– la figure 7 illustre un cas où les deux taches focales sont séparées d'une distance qui correspond à la largeur de l'objet à repérer,

– la figure 8 montre l'allure des deux signaux obtenus dans ce cas et, enfin,

– la figure 9 montre l'allure du signal de différence correspondant.

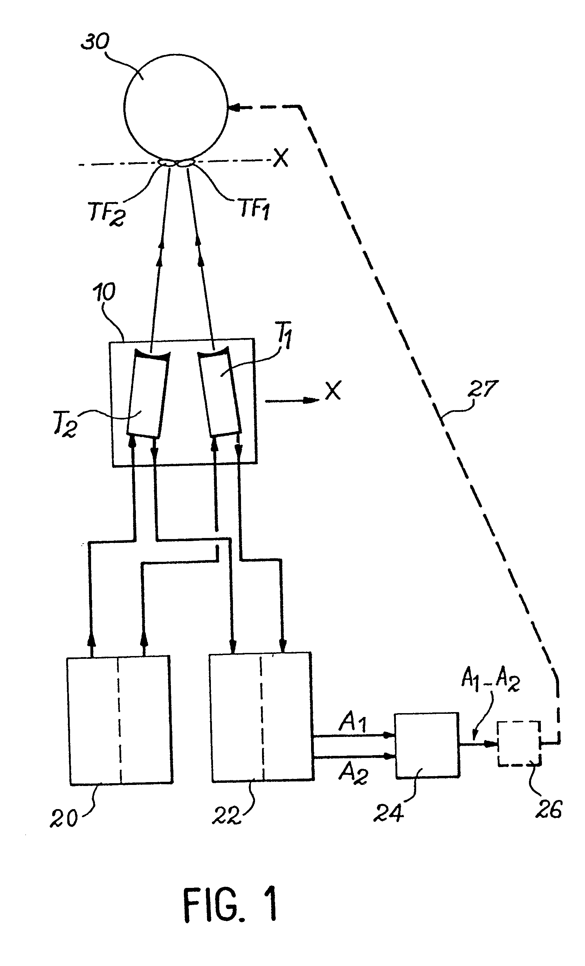

Tel que représenté sur la figure 1, le dispositif de l'invention comprend:

– une sonde 10 constituée de deux transducteurs ultrasonores $T_1$, $T_2$ émettant chacun un faisceau d'ondes ultrasonores focalisés sur une tache focale, respectivement $TF_1$ et $TF_2$, les deux taches focales étant décalées l'une par rapport à l'autre le long d'une direction X,

– un circuit 20 d'alimentation des deux transducteurs,

– un circuit 22 comprenant un amplificateur des signaux délivrés par les deux transducteurs, et comprenant deux échantillonneurs-bloqueurs, ce circuit délivrant deux signaux $A_1$ et $A_2$,

– un circuit 24 apte à former un signal de différence égal à $A_1$-$A_2$.

Par «échantillonneur-bloqueur» on entend tout circuit apte à saisir l'amplitude maximale d'une impulsion et à maintenir un signal égal à cette amplitude. On désigne encore ces circuits par circuits d'échantillonnage et de maintien, ou «sample and hold» en terminologie anglosaxonne.

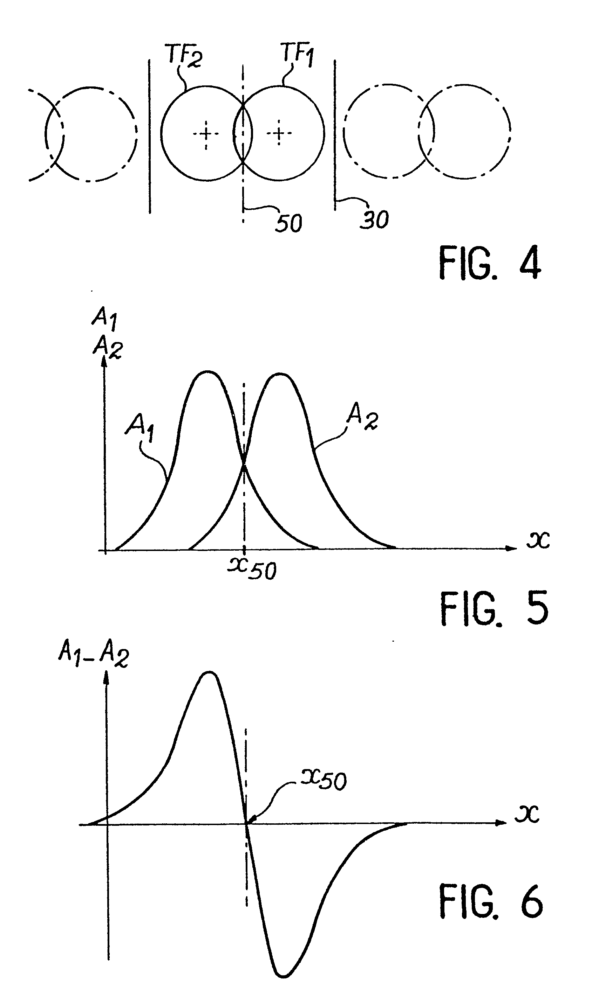

Les signaux délivrés par le circuit 22 sont des signaux en marches d'escalier (du fait de l'échantillonnage à la valeur maximale du signal d'écho et du maintien à cette valeur). L'enveloppe de ces signaux sera représentée sur la figure 5. On comprend ainsi que les signaux d'échos ne sont pas traités en temps réel, puisqu'ils sont bloqués à une valeur échantillonnée.

Le dispositif peut éventuellement comprendre un circuit 26 apte à détecter l'instant où le signal de différence s'annule.

Le dispositif se complète éventuellement par un moyen non représenté apte à déplacer la sonde 10 dans la direction X ou à déplacer l'objet dans cette même direction, la sonde restant fixe.

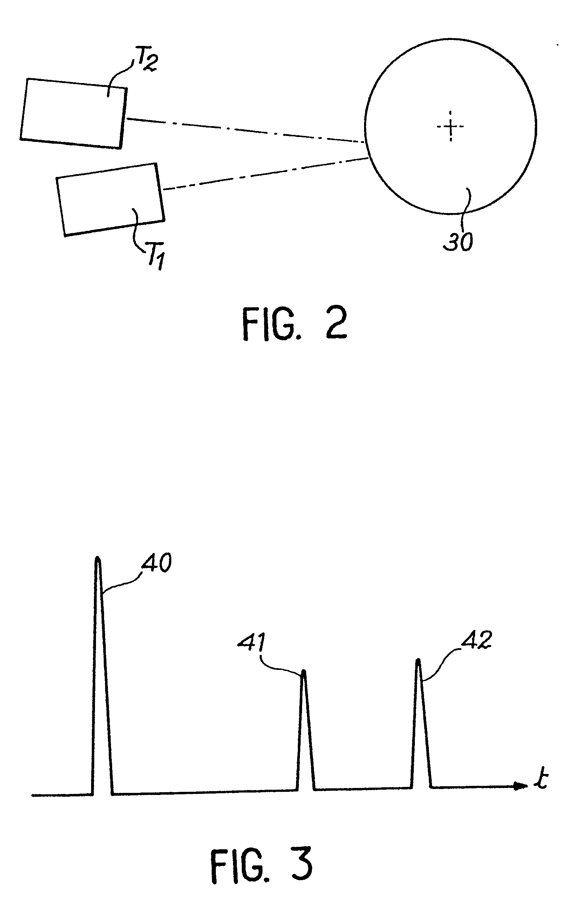

Dans une disposition privilégiée mais non obligatoire, les deux transducteurs $T_1$ et $T_2$ sont décalés l'un par rapport à l'autre dans le sens de la direction d'émission des ondes ultrasonores. En d'autres termes, les distances entre les transducteurs et l'objet 30 à repérer (distance appelée parfois «hauteur d'eau», car les transducteurs baignent en pratique dans un liquide de couplage) ne sont pas les mêmes. C'est ce qui est illustré sur la figure 2. Dans ce cas, les impulsions d'écho correspondant à un même objet, qui sont délivrées par les deux transducteurs, sont décalées dans le temps comme le montre le diagramme de la figure 3: une impulsion d'émission 40 est suivie d'un premier écho 41 provenant du transducteur $T_1$, qui est le plus proche de l'objet à repérer et d'un second écho 42 provenant du transducteur $T_2$ qui est le plus éloigné.

Cette disposition présente l'intérêt de permettre le regroupement des circuits d'amplification en un seul circuit travaillant alternativement sur l'un des échos puis sur l'autre, puisque ces deux échos sont séparés dans le temps.

Naturellement, les circuits d'alimentation peuvent être avantageusement regroupés eux aussi en un seul, les deux transducteurs étant alors attaqués en parallèle.

On pourrait encore n'utiliser qu'un seul circuit d'amplification avec des transducteurs situés tous deux à la même distance de l'objet mais en les alimentant par deux circuits distincts excitant les deux transducteurs à des instants différents.

En ce qui concerne la disposition relative des faisceaux ultrasonores dans l'espace, plusieurs variantes sont possibles selon la forme de l'objet à traiter. Dans le cas de la figure 4, il s'agit de repérer la position du plan médian 50 d'un objet cylindrique 30 (autrement dit de son axe). Les deux taches focales $TF_1$ et $TF_2$ se recouvrent alors partiellement. Lors du défilement de la sonde dans la direction X, les signaux échantillonnés correspondant aux deux transducteurs présentent l'allure illustrée sur la figure 5 où leur amplitude est portée en ordonnées et le déplacement x en abscisse. Le signal de différence $A_1$-$A_2$ présente l'allure illustrée sur la figure 6. A l'abscisse $x_{50}$ les signaux $A_1$ et $A_2$ sont égaux et le signal différence est nul. C'est l'abscisse correspondant à l'axe de l'objet.

On notera le caractère impair de la courbe de la figure 6 qui permet de déterminer le signe de l'écart par rapport à l'axe, comme indiqué plus haut.

On observera soigneusement que le diagramme de la figure 5 représente l'enveloppe des signaux échantillonnés et maintenus (signaux delivrés par les échantillonneurs-bloqueurs), par rapport à une variable spatiale x et non temporelle t comme pour la figure 3. Cela signifie que les deux impulsions $A_1$ et $A_2$ de la figure 5 ne sont pas deux échos dont on ferait la différence, mais deux signaux résultant d'un traitement particulier des échos reçus. Un traitement mettant en œuvre une différence d'échos reçus est déjà connu mais n'a aucun rapport avec la technique de l'invention. Dans une telle technique, il s'agit de soustraire des échos reçus pour éliminer les échos simultanés (échos «fixes») et ne conserver que les échos provenant d'un objet intéressant. L'opération de différence affecte alors les signaux tels que délivrés par les transducteurs, signaux traités en temps réel, ce qui exclut naturellement l'échantillonnage et le maintien. Le signal de différence obtenu après un tel traitement est repéré par rapport au temps et non par rapport à l'espace. En bref, une telle technique fait appel à une comparaison temporelle alors que l'invention met en œuvre une comparaison d'amplitude, la variable utilisée n'étant plus le temps mais le déplacement x de la sonde. Par ailleurs, une telle technique ne fait pas appel à une porte de sélection temporelle, ce qui est d'ailleurs la raison pour laquelle on est en présence de multiples échos provenant d'obstacles situés à des distances diverses. Cette technique est décrite dans le document GB-A 2 032 104.

On observera pour finir que le déplacement se fait dans une direction bien déterminée, à savoir la direction X dans laquelle sont décalées les deux taches focales. C'est précisément pour cette raison qu'on peut repérer l'objet dans cette direction.

Le dispositif de l'invention est aisément insérable dans une boucle d'asservissement de position d'un objet. Il suffit de considérer que le signal $A_1$-$A_2$ est un signal d'erreur utilisable pour corriger la position de l'objet. Cette correction se fait dans le sens tel que le signal de différence s'annule. C'est ce qui est schématisé sur la figure 1 par la boucle en tirets 27 partant du circuit 24.

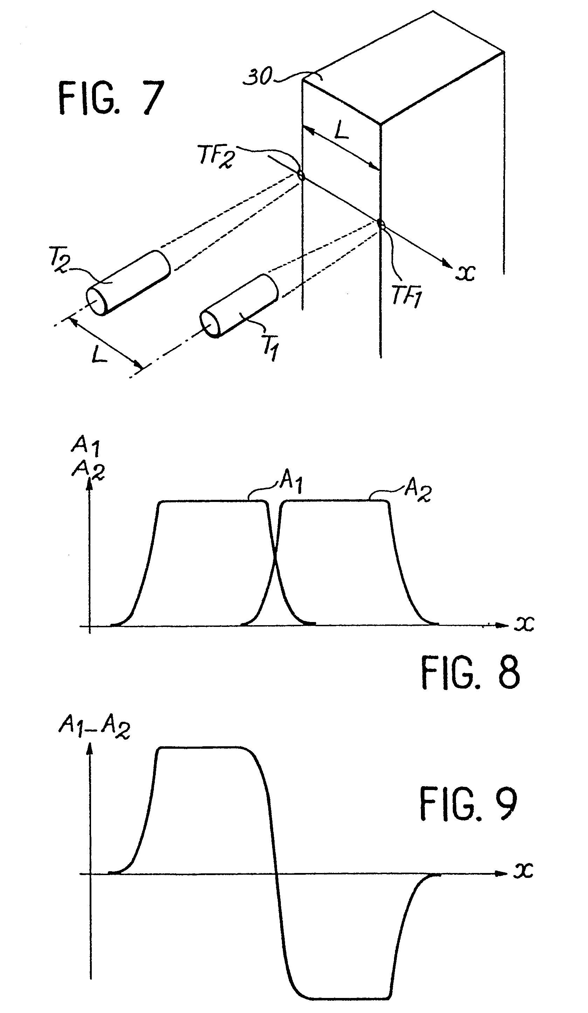

Dans le cas où l'on désire repérer le bord d'un objet rectangulaire tel que représenté sur la figure 7, les deux transducteurs sont disposés de manière à ce que leurs taches focales $TF_1$, $TF_2$ sont écartées d'une distance L qui est précisément la largeur de l'objet à repérer. Les signaux de mesure $A_1$ et $A_2$ ont alors des allures représentées sur la figure 8 et le signal de différence $A_1$-$A_2$ une allure représentée sur la figure 9, qui permet d'identifier la présence d'un objet tel que représenté en figure 7. Le passage par la valeur nulle de ce signal correspond à la situation représentée sur la figure 7 où la tache focale $TF_1$ quitte le bord droit de l'objet alors que la tache focale $TF_2$ atteint le bord gauche de celui-ci. Le passage par zéro indique que la sonde est calée sur les bords de l'objet ou, inversement, si c'est l'objet qui se déplace devant la sonde, que cet objet est à cet instant en face de la sonde.

Les deux bords ne sont pas obligatoirement parallèles; l'invention peut être utilisée pour reconnaître par exemple un rond, un pentagone, ...

Dans la définition de l'invention qui précède, l'expression «au moins deux transducteurs» signifie qu'on peut utiliser des sondes qui comprennent plus de deux transducteurs $T_1$, $T_2$, $T_3$, ... Les signaux délivrés par tous ces transducteurs sont alors associés deux par deux pour former des signaux différence $A_1$-$A_2$, $A_1$-$A_3$, $A_2$-$A_3$, etc. ..., ce qui permet de repérer la position d'un objet selon plusieurs directions qui sont les directions des couples de transducteurs $T_1T_2$, $T_1T_3$, $T_2T_3$ etc. ..., en centrant la sonde vis-à-vis de l'objet.

En ce qui concerne les moyens électroniques à mettre en œuvre dans l'invention, ils sont classiques, puisqu'il s'agit essentiellement d'exciter des transducteurs ultrasonores, et d'amplifier les signaux qu'ils délivrent. L'originalité des moyens électroniques tient dans la présence d'un circuit formateur de signal de différence. Ce circuit peut être constitué par un amplificateur différentiel à deux entrées, l'une inverseuse reliée à la chaîne d'amplification associée à l'un des transducteurs et l'autre non inverseuse reliée à la chaîne d'amplification associée à l'autre transducteur.

### Revendications

1. Dispositif pour le repérage de l'existence et/ou de la position d'un objet (30) traversant le champs de vue du dispositif, ce dispositif comprenant une sonde ultrasonore (10) constituée par deux transducteurs ultrasonores ($T_1$, $T_2$) travaillant en impulsions et émettant chacun un faisceau d'ondes ultrasonores en direction de l'objet à repérer, les deux faisceaux étant dirigés le long des voies séparées, des moyens d'alimentation (20) des transducteurs, des moyens de traitement (22, 24) des signaux délivrés par la sonde, ces moyens étant capables notamment d'effectuer une différence entre deux signaux, ce dispositif étant caractérisé par le fait que les transducteurs ($T_1$, $T_2$) émettent des faisceaux focalisés sur des taches focales ($TF_1$, $TF_2$), les deux taches focales étant décalées l'une par rapport à l'autre le long de la direction (X) de déplacement relatif de l'objet, le plan médiateur entre les axes des deux faisceaux définissant un plan de référence pour ledit repérage, et par le fait que les moyens de traitement comprennent un circuit (22) d'échantillonnage et de maintien apte à prélever l'amplitude maximale des signaux délivrés par les deux transducteurs et à maintenir cette amplitude, et un circuit (24) apte à former un signal de différence ($A_1$–$A_2$) entre les signaux échantillonnés et maintenus correspondant aux deux transducteurs.

2. Dispositif selon la revendications 1, caractérisé en ce que les deux transducteurs ($T_1$, $T_2$) sont décalés l'un par rapport à l'autre dans le sens de la direction d'émission des ondes ultrasonores, les moyens d'alimentation des deux transducteurs étant réunis en un seul circuit (20) alimentant en parallèle les deux transducteurs et les moyens de traitement des deux transducteurs étant réunis en un seul circuit de traitement.

3. Dispositif selon l'une quelconque des revendications 1 ou 2, caractérisé en ce que les deux taches focales se recouvrent partiellement.

4. Dispositif selon l'une quelconque des revendications 1 ou 2, caractérisé en ce que l'objet présentant deux bords distants d'un certain écartement (L), les deux taches focales sont distantes l'une de l'autre dudit écartement (L).

5. Dispositif selon la revendication 1, caractérisé par le fait qu'il comprend des transducteurs additionnels émettant des faisceaux focalisés additionnels, les moyens de traitement traitant de la même manière tous les signaux délivrés par les différents transducteurs, le circuit (24) apte à former un signal de différence recevant les signaux échantillonnés et maintenus de différents couples de transducteur et formant différents signaux de différence selon les couples de transducteurs considérés, ce qui permet de repérer la position d'un objet par rapport à divers plans de référence constitués par les différents plans médiateurs des différents couples de taches focales.

### Patentansprüche

1. Gerät zum Orten der Anwesenheit und/oder der Position eines Objektes (30), das das Erfassungsfeld des Geräts durchquert, wobei das Gerät eine Ultraschallsonde (10) enthält, die von zwei Ultraschallwandlern ($T_1$, $T_2$) gebildet ist, die impulsweise arbeiten und jeweils einen Ultraschallstrahl in Richtung des zu ortenden Objektes richten, wobei die zwei Strahlen längs getrennter Bahnen gerichtet sind und wobei Versorgungseinrichtungen (20) für die Wandler und Verarbeitungseinrichtungen (22, 24) für die von der Sonde gelieferten Signale vorgesehen sind, welche Einrichtungen insbesondere in der Lage sind, eine Differenz zwischen den zwei Signalen hervorzurufen, wobei das Gerät durch die Tatsache gekennzeichnet ist, dass die Wandler $(T_1, T_2)$ Strahlen aussenden, die auf Brennpunkte $(TF_1, TF_2)$ fokussiert sind, wobei die zwei Brennpunkte gegeneinander längs der relativen Verschiebungsrichtung (X) des Objekts versetzt sind, wobei die Mittenebene zwischen den Achsen der zwei Strahlen eine Bezugsebene für die Ortung definiert, und durch die Tatsache, dass die Verarbeitungseinrichtungen eine Abtasthalteschaltung (22) aufweisen, die dazu eingerichtet ist, die Maximalamplitude der von den zwei Wandlern gelieferten Signale zu erfassen und diese Amplitude zu halten, und eine Schaltung (24) aufweisen, die dazu eingerichtet ist, ein Differenzsignal $(A_1-A_2)$ zwischen den von den entsprechenden zwei Wandlern gelieferten abgetasteten und gehaltenen Signalen zu bilden.

2. Gerät nach Anspruch 1, dadurch gekennzeichnet, dass die zwei Wandler $(T_1, T_2)$ gegeneinander im Sinne der Emissionsrichtung der Ultraschallwellen gegeneinander versetzt sind, dass die Versorgungseinrichtungen der zwei Wandler in einer einzigen Schaltung (20) vereinigt sind, die die zwei Wandler parallel versorgt, und dass die Verarbeitungseinrichtungen der zwei Wandler in einer einzigen Verarbeitungsschaltung vereinigt sind.

3. Gerät nach einem der Ansprüche 1 oder 2, dadurch gekennzeichnet, dass sich die zwei Fokussierpunkte teilweise überdecken.

4. Gerät nach einem der Ansprüche 1 oder 2, dadurch gekennzeichnet, dass das Objekt zwei um einen gewissen Versatz (L) voneinander beabstandete Ränder aufweist und die zwei Brennpunkte voneinander um diesen Versatz (L) voneinander entfernt sind.

5. Gerät nach Anspruch 1, gekennzeichnet durch die Tatsache, dass es zusätzliche Wandler enthält, die zusätzliche fokussierte Strahlen abgeben, wobei die Verarbeitungseinrichtungen alle von den unterschiedlichen Wandlern gelieferten Signale auf die gleiche Weise verarbeiten, wobei die zur Bildung eines Differenzsignals eingerichtete Schaltung (24) die von unterschiedlichen Wandlerpaaren gelieferten abgetasteten und gehaltenen Signale aufnimmt und entsprechend den jeweiligen Wandlerpaaren unterschiedliche Differenzsignale bildet, was es erlaubt, die Position eines Objekts in bezug auf verschiedene Bezugsebenen zu orten, die von den unterschiedlichen Mittenebenen der unterschiedlichen Brennpunktpaare gebildet sind.

**Claims**

1. Device for recording the existence and/or the position of an object (30) traversing the field of view of the device, this device comprising an ultrasonic probe (10) formed by two ultrasonic transducers $(T_1, T_2)$ operating in pulses and each emitting a beam of ultrasonic waves in the direction of the object to be recorded, the two beams being directed along the separate channels, means (20) for supplying the transducers, means (22, 24) for processing the signals supplied by the probe, these means being capable, in particular, of forming a difference between two signals, this device being characterized in that the transducers $(T_1, T_2)$ emit beams focused on focal spots $(TF_1, TF_2)$, the two focal spots being offset in relation to one another along the direction (X) of relative displacement of the object, the median plane between the axes of the two beams defining a reference plane for the said recording, and in that the processing means comprise a sampling and maintenance circuit (22) capable of picking off the maximum amplitude of the signals supplied by the two transducers and of maintaining this amplitude, and a circuit (24) capable of forming a difference signal $(A_1-A_2)$ between the sampled and maintained signals corresponding to the two transducers.

2. Device according to claim 1, characterized in that the two transducers $(T_1, T_2)$ are offset in relation to one another in the sense of the direction of emission of the ultrasonic waves, the means for supplying the two transducers being combined into a single circuit (20) supplying the two transducers in parallel and the processing means of the two transducers being combined in a single processing circuit.

3. Device according to either one of claims 1 or 2, characterized in that the two focal spots partially overlap.

4. Device according to either one of claims 1 or 2, characterized in that, the object exhibiting two edges spaced by a certain distance (L), the two focal spots are spaced from one another by the said distance (L).

5. Device according to claim 1, characterized in that it includes additional transducers emitting additional focused beams, the processing means processing in the same manner all the signals supplied by the various transducers, the circuit (24) capable of forming a difference signal receiving the sampled and maintained signals of different pairs of transducers and forming various difference signals according to the pairs of transducers considered, which permits the recording of the position of an object in relation to various reference planes formed by the various median planes of the various pairs of focal spots.

FIG. 1

FIG. 2

FIG. 3

FIG. 4

FIG. 5

FIG. 6

FIG. 7

30

L

TF2

T2

TF1

L

x

T1

A1
A2

A1

A2

x

FIG. 8

A1−A2

x

FIG. 9

13